# EUROPÄISCHE PATENTSCHRIFT

(11) **EP 0 417 712 B1**
(45) Veröffentlichungstag und Bekanntmachung des Hinweises auf die Patenterteilung: **20.04.1994**
(21) Anmeldenummer: 90117425.0
(22) Anmeldetag: 10.09.1990
(51) Int. Cl.: B60C 23/04

(54) **Ventil mit Signalerzeugungseinrichtung für Fahrzeugreifen**
Valve for vehicle tyres provided with signalisation means
Valve avec dispositif de signalisation pour pneus de véhicule

(30) Priorität: 12.09.1989 DE 3930479
(43) Veröffentlichungstag der Anmeldung: 20.03.1991
(73) Patentinhaber: Achterholt, Rainer, D-87471 Durach (DE)
(72) Erfinder: Achterholt, Rainer, D-87471 Durach (DE)
(74) Vertreter: Brehm, Hans-Peter, Dr. Dipl.-Chem.

(56) Entgegenhaltungen:
- EP-A- 0 351 997
- WO-A-88/03879
- WO-A-89/05239
- DE-A- 3 209 661
- DE-A- 3 546 338
- DE-A- 3 605 661
- DE-C- 3 738 413
- FR-A- 2 492 742
- GB-A- 892 201
- GB-A- 2 171 525

## Beschreibung

Die Erfindung betrifft ein Ventil mit einer Einrichtung zur Erzeugung eines drahtlos übermittelbaren Anzeigesignals bei Druckabnahme in Fahrzeugreifen. Dieses Ventil ist insbesondere für die Reifen von Pkw und Lkw bestimmt. Das Ventil kann bei Schlauchreifen und bei schlauchlosen Reifen eingesetzt werden.

Mehr im einzelnen betrifft die Erfindung ein Ventil mit einer Einrichtung zur Erzeugung eines drahtlos übermittelbaren Anzeigesignals bei Druckabnahme in Fahrzeugreifen, mit einem Fuß, von dem ein Ventilschaft absteht. Die Signalerzeugungseinrichtung weist eine vom zu überwachenden Reifendruck beaufschlagte Membran auf, die bei anormalem Reifendruck auslenkbar ist. Ferner weist die Signalerzeugungseinrichtung einen Sender, eine Stromversorgungseinrichtung und ein mechanisches, im Regelfalle offenes Schaltglied auf, das bei einer Membranauslenkung geschlossen wird, woraufhin der Sender aktiviert wird.

Ein Ventil dieser Art ist aus der Deutschen Offenlegungsschrift 36 05 661 bekannt. Die Signalerzeugungseinrichtung ist seitlich am Schaft des bekannten Ventiles angebracht. Ihre Anwesenheit kann den optischen Eindruck beeinträchtigen und die Anbringung anderer Radkomponenten wie Zierblenden und dergleichen behindern. Die Membran der bekannten Einrichtung steht unter der Vorspannung einer Feder. Derartige Anordnungen sind nur für einen eng begrenzten Druckbereich ausgelegt, welcher von der Federkraft der Feder abhängt. Die Membran muß dem Reifendruck standhalten, was die Empfindlichkeit der Anordnung herabsetzt. Ferner können bereits die bei einem typischen Reifengebrauch auftretenden, zulässigen Reifendruckschwankungen Membranauslenkungen verursachen, und damit eine Fehlanzeige auslösen. Die mit Hilfe der Feder vorgespannte Membran soll bei unzulässig hohem oder tiefem Reifendruck einen Schalter betätigen, woraufhin der Sender aktiviert wird. Solange der unzulässige Reifendruck herrscht, bleibt der Sender aktiviert und zieht Energie aus der Versorgungsquelle. Es bestehen Zweifel, ob dieser bekannte Vorschlag realisierbar ist oder bereits realisiert wurde.

Weiterhin ist aus der Deutschen Patentschrift 35 46 338 eine Ventilkappe für Luftreifen bekannt, die eine optisch wahrnehmbare Druckabnahmeanzeige vermittelt. Der Innenraum der bekannten Ventilkappe ist durch eine Membran in eine mit dem zu überwachenden Reifendruck beaufschlagte Druckkammer sowie in eine Referenzkammer unterteilt, welche beim Aufschrauben der Ventilkappe auf ein Reifenventil mit einem Solldruck beaufschlagt wird. Diese Referenzkammer ist teilweise von einem durchsichtigen Gehäuseabschnitt begrenzt. Sinkt der zu überwachende Druck unter den Solldruck, so wird die vorzugsweise farbige Membran in Richtung auf den durchsichtigen Gehäuseabschnitt hin ausgelenkt, und das Sichtbar-werden dieser Membran dient als Anzeige einer Druckabnahme. Mit dieser bekannten Ventilkappe ist eine drahtlose Signalübertragung nicht möglich.

Die Aufgabe der vorliegenden Erfindung besteht darin, ein Reifenventil der eingangs genannten Art bereitzustellen, das sich hinsichtlich seines optischen Eindrucks und seiner Handhabbarkeit von bekannten Reifenventilen nicht unterscheidet, dessen Signalerzeugungseinrichtung einerseits hochempfindlich ist und andererseits in einem weiten Bereich verschiedener Reifendrücke anwendbar ist, von üblichen, zulässigen Reifendruckschwankungen nicht gestört wird und dessen Sender wartungsfrei für eine mehrjährige Gebrauchsdauer mit gegebenenfalls einer Vielzahl von Alarmimpulsen ausgelegt ist, die sicher von Fremdsignalen unterscheidbar sind.

Ausgehend von einem Ventil mit einer Einrichtung zur Erzeugung eines drahtlos übermittelbaren Anzeigesignals bei Druckabnahme in Fahrzeugreifen, gemäß der oben angegebenen, gattungsbildenden Art, ist die erfindungsgemäße Lösung dieser Aufgabe dadurch gekennzeichnet, daß die Signalerzeugungseinrichtung an der zum Ventilschaft abgewandten Seite des Fußes angebracht ist. Der Sender weist eine Ablaufsteuerung auf, welche nach kurzfristiger Signalaussendung diese Signalaussendung wieder unterbricht, und den Sender erneut in einen Bereitschaftszustand versetzt. Die Signalerzeugungseinrichtung weist eine Referenzkammer auf, die bei geöffnetem Reifenventil über einen in diesem geführten Kanal mit einem Solldruck beaufschlagbar ist und bei geschlossenem Reifenventil druckdicht verschlossen ist. Diese Referenzkammer ist teilweise von der Membran begrenzt, die eine von der Referenzkammer weg ausgelenkte Stellung einnimmt und dabei die Schließung des Schaltgliedes veranlaßt, wenn der zu überwachende Reifendruck kleiner als der Solldruck ist.

Diese Merkmalskombination schafft ein mit einer Signalerzeugungseinrichtung versehenes Ventil für Luftreifen, das wie ein herkömmliches Reifenventil gehandhabt werden kann. Die am Ventilfuß angebrachte Signalerzeugungseinrichtung befindet sich im Reifeninneren und kann weder den optischen Eindruck des Ventiles stören noch die Anbringung anderer Radelemente, wie etwa Zierkappen behindern. Die Komponenten der Signalerzeugungseinrichtung sind vor einer unbefugten Entfernung vom Reifenventil geschützt. Die Signalerzeugungseinrichtung bildet zusammen mit der Referenzkammer, den elektrischen und/oder elektronischen Komponenten des Senders und einer Batterie ein einziges Bauteil, das einfach aufgebaut ist, geringe Abmessungen hat und ein geringes Gewicht aufweist. Beispielsweise konnte eine solche Signalerzeugungseinrichtung in Form eines zylindrischen Bauteils realisiert werden, das einen Außendurchmesser von etwa 18 mm, eine Länge von etwa 7 mm und - einschließlich Batterie - ein Gewicht von weniger als 10 g aufweist. Die Anwesenheit dieser Signalerzeugungseinrichtung erhöht die vom Reifenventil verursachte Unwucht nicht wesentlich. Weil die Schaltung des Senders eine auf einen zu geringen Reifendruck hinweisende Signalaussendung selbsttätig nach kurzer Dauer der Signalaussendung wieder unterbricht, verbraucht ein Alarmimpuls nur wenig Energie. Die Stromversorgungseinrichtung der Signalerzeugungseinrichtung kann beispielsweise eine Lithium-Batterie sein, die 3 V und eine Kapazität von ca. 40 mAh liefert. Mit einer solchen Batterie kann die Signalerzeugungseinrichtung des erfindungsgemäßen Ventils wenigstens 500 bis 1000 Alarmimpulse auslösen. Es ist deshalb möglich, die Signalerzeugungseinrichtung wartungsfrei im Inneren des Reifens unterzubringen. Weil erfindungsgemäß die Druckerfassung mit Hilfe einer Referenzkammer erfolgt, in welcher ein vorgegebener Solldruck gespeichert ist, wird die Membran lediglich der geringen Druckdifferenz zwischen dem zu überwachenden Druck und dem Solldruck ausgesetzt. Die Membran kann dünn und hochempfindlich ausgeführt werden. Eine einzige Ausführungsform einer Signalerzeugungseinrichtung kann bei den verschiedensten Reifendrücken angewandt werden, weil lediglich die Differenz zwischen dem zu überwachenden Reifendruck und dem in der Referenzkammer gespeicherten Solldruck erfaßt wird. Eine solche Referenzkammer bringt optimale Ergebnisse in Verbindung mit einem mechanisch betätigbaren, elektrischen Schaltglied, weil eine vergleichsweise geringe Membranverstellung ausreicht, das im Regelfalle offene Schaltglied zu schließen. Zur Membranverstellung müssen weder nennenswerte Massen bewegt noch irgendwelche Federkräfte überwunden werden. Es wird eine hohe Empfindlichkeit erhalten, die dennoch durch die bei üblichem Reifengebrauch auftretenden, zulässigen Reifendruckschwankungen nicht beeinflußt wird, weil diese Reifendruckschwankungen zumeist Reifendruckerhöhungen sind, die keine Membranauslenkung verursachen. Vorzugsweise erzeugt der Sender zwei Signalfrequenzen mit unterschiedlicher Frequenz, die alternierend mit vorgegebener Impulsfolge abgestrahlt werden. Hierdurch kann eine enge und charakteristische Kopplung mit einem zugeordneten Empfänger erzielt werden, die praktisch durch Fremdsignalquellen nicht störbar ist. Jedem Sender/jedem Reifenventil ist ein entsprechend abgestimmter Empfänger zugeordnet, wobei der maximale Abstand zwischen Empfänger und Sender vorzugsweise weniger als 1000 mm beträgt. Die Zuordnung zu einem bestimmten Rad erfolgt über den zugeordneten Empfänger, der direkt mit einer Anzeigeeinrichtung am Armaturenbrett des Fahrzeuges oder dergleichen verknüpft ist. Eine einzige Ausführungsform des erfindungsgemäßen Ventils ist für sämtliche Räder eines Fahrzeugs geeignet. Überraschenderweise behindert auch die Anwesenheit von Stahlcord in einem Fahrzeugreifen die Ausbreitung der Signalfrequenzen und deren zuverlässigen Empfang durch den Empfänger nicht. Unter diesen Bedingungen kann ein Fehlalarm als Folge von zulässigem Reifendruckschwankungen oder als Folge von Fremdsendungen sowie die Störung anderer Empfänger praktisch ausgeschlossen werden.

Vorteilhafte Ausgestaltungen und Weiterbildungen der Erfindung ergeben sich aus den Unteransprüchen.

Wie bereits gesagt, weist die Signalerzeugungseinrichtung eine Referenzkammer auf, die bei geöffnetem Reifenventil mit einem Solldruck beaufschlagbar und bei geschlossenem Reifenventil druckdicht verschlossen ist. Bei einem typischen Reifenventil begrenzt der Ventilschaft eine Ventilbohrung, an der ein Ventilsitz ausgebildet ist, an welchem ein Ventilkörper anliegen kann, um das Reifenventil zu verschliessen. Nach einem Gesichtpunkt der Erfindung kann vorgesehen sein, daß in diesen Ventilsitz ein Kanal mündet, über welchen die Referenzkammer mit Druckmedium beaufschlagbar ist. Wird dieser Ventilkörper durch Verstellung eines Ventilstößels von seinem Ventilsitz gelöst, etwa um über das Reifenventil einen Luftreifen auf den gewünschten Reifendruck zu bringen, so kann über diesen nunmehr offenen Kanal ein Austausch von Druckmedium zwischen Referenzkammer und Ventilbohrung erfolgen, wobei die Referenzkammer mit einem gewünschten Solldruck beaufschlagt wird. Legt sich daraufhin der Ventilkörper wieder an den Ventilsitz an, um das Reifenventil zu schließen, wird auch der Kanal verschlossen, und die Referenzkammer ist und bleibt druckdicht verschlossen.

Nach einer anderen Alternative kann innerhalb der Ventilbohrung ein Rohrabschnitt angeordnet sein, der einen Kanal oder einen Kanalabschnitt begrenzt, über welchen die Referenzkammer mit Druckmedium beaufschlagbar ist. In diesen Rohrabschnitt ist ein zusätzliches Hilfsventil eingesetzt, das gemeinsam mit dem Reifenventil geöffnet oder geschlossen wird. Beispielsweise kann es sich bei diesem Hilfsventil um ein ebenfalls innerhalb der Ventilbohrung angeordnetes Rückschlagventil handeln, das im Regelfalle seine Schließstellung einnimmt. Wird der Ventilstößel niedergedrückt, um das Reifenventil zu öffnen, so wirkt eine Verlängerung dieses Ventilstößels auf das Rückschlagventil ein und öffnet dieses. Nach Schließen des Reifenventils nimmt das Rückschlagventil unter der Wirkung einer Feder oder dergleichen erneut seine Schließstellung ein.

Die Signalerzeugungseinrichtung weist eine Referenzkammer auf, in welcher ein Solldruck dauerhaft gespeichert werden kann. Die Referenzkammer ist innerhalb einer flachen Dose ausgebildet, die im wesentlichen aus einem Dosenboden und einer einstückig angeformten Dosenumfangswand besteht, die ihrerseits eine Stirnfläche aufweist. Die Dosenöffnung ist von der Membran verschlossen, die an der Innenseite der Dosenumfangswand festgelegt ist. Ein zylindrischer Abschnitt der Dosenumfangswand steht über die Membran hinaus.

Innerhalb der Dosenumfangswand ist ein Durchlaß ausgespart, der an der Stirnfläche der Dosenumfangswand beginnt, in den Doseninnenraum bzw. in die Referenzkammer mündet und an den Kanal im Ventilfuß bzw. im Ventilschaft angeschlossen ist. Über diesen Kanal und den Durchlaß kann die Referenzkammer mit einem, den Solldruck aufweisenden Druckmedium beaufschlagt werden.

An dem über die Membran hinausstehenden Abschnitt der Dosenumfangswand ist an gegenüberliegenden Stellen ein Leiterabschnitt, beispielsweise in Form eines Metallbügels befestigt. Der Leiterabschnitt ist parallel zur Membran und in geringem Abstand zu deren Ruhelage angeordnet. Der Leiterabschnitt ist elektrisch leitend mit der Schaltung des Senders verknüpft und bildet einen feststehenden Kontakt des Schaltgliedes.

Das erfindungsgemäße Ventil ist mit einer Stromversorgungsquelle zur Versorgung der elektrischen und/oder elektronischen Komponenten des Senders mit Strom/Spannung ausgerüstet. Beispielsweise kann es sich hierbei um eine Lithium-Batterie handeln, die eine Kapazität von wenigstens 40 mAh besitzt und eine Spannung von 3 V liefert. Eine solche Batterie kann als Knopfzelle ausgebildet sein und ist in das Gehäuse der Signalerzeugungseinrichtung intergriert. Die Schaltung des Senders befindet sich im Regelfalle in einem Bereitschaftszustand, in welchem der Batterie nahezu keine Energie entzogen wird. Der Übergang aus dem Bereitschaftszustand in einen aktivierten Zustand, in welchem der Sender Signalfrequenzen aussendet, erfolgt durch Schließen eines Schaltgliedes. Vorzugsweise gehört zu diesem Schaltglied ein Leiterabschnitt, der parallel und in geringem Abstand zur Ruhelage der Membran angeordnet ist. Das Gegenstück bildet ein Metallplättchen, das im Zentrum der Membran angeordnet ist und bei einer Membranauslenkung den Leiterabschnitt berührt, und damit einen elektrischen Stromkreis bzw. das Schaltglied schließt. Hierauf wird die Schaltung aktiviert und der Sender sendet Signalfrequenzen aus. Dieses Schaltglied arbeitet zuverlässig, empfindlich und schnell, weil nennenswerte Gegenkräfte nicht überwunden werden müssen.

Eine Membranauslenkung von einigen wenigen 1/10-Millimetern ist ausreichend, um das Schaltglied zu schließen.

Nachdem das Schaltglied geschlossen ist, erfolgt eine einmalige Signalaussendung für eine begrenzte Zeitdauer. Vorzugsweise ist die Signalaussendung auf etwa 1 bis 2 Sekunden begrenzt. Eine solche Signalaussendung kann vorzugsweise aus der alternierenden, periodischen Abstrahlung unterschiedlicher Signalfrequenzen bestehen. Dies kann beispielsweise mit einem erfindungsgemäß vorgesehenen Sender realisiert werden, der im wesentlichen aus einer Digitalschaltung und einem Schwingkreis besteht, dessen Spule als Sendeantenne ausgebildet ist. Nach einem wesentlichen Gesichtspunkt der vorliegenden Erfindung ist eine solche Ablaufsteuerung der Digitalschaltung vorgesehen, welche nach kurzfristiger Signalaussendung diese Signalaussendung wieder unterbricht und den Sender erneut in einen Bereitschaftszustand versetzt.

Hierzu kann die Digitalschaltung als wesentliche Funktionsgruppen vorzugsweise einen RC-Generator, eine Startvorrichtung (Trigger), eine Modulationsschaltung, einen vielstufigen Frequenzteiler und einen ein- und ausschaltbaren Leistungsverstärker aufweisen. Der RC-Generator (Oszillator) liefert verschiedene Signalfrequenzen, deren jeweilige Frequenz durch die Komponenten Widerstand (R) und Kondensator (C) bestimmt sind. Die Schaltung ist so aufgebaut, daß durch verschiedene Rückführungen vom Frequenzteiler die entsprechenden Funktionsgruppen der Digitalschaltung so angesteuert werden, daß durch das Schließen des Schaltgliedes die Schaltung gestartet und eine vollständige Signalaussendung durchgeführt wird. Ist dies erfolgt, dann werden die Leistungsverstärker und der RC-Oszillator abgeschaltet, was zu einer ganz wesentlichen Reduzierung der aus der Batterie aufgenommenen Leistung führt. Dadurch ist die Schaltung wieder auf Bereitschaft zurückgeschaltet und ist für eine neue Signalausgabe sendebereit, selbst wenn das Schaltglied weiterhin geschlossen bleibt. Eine erneute Signalausgabe erfolgt erst dann, nachdem die Membran zurückgesetzt und das Schaltglied geöffnet worden ist und bei erneuter Erfassung einer Reifendruckabnahme wieder geschlossen wird.

Das Sendesignal wird vorzugsweise bei vergleichsweise langwelligen Frequenzen im kHz-Bereich abgestrahlt. In diesem Bereich sind kaum Störungen durch fremde Signalquellen zu erwarten. Dennoch kann eine störungsfreie Übertragung des Sendesignals zu dem/den vorzugsweise nicht mehr als 1000 mm entfernten Empfänger(n) im Radbereich des Fahrzeuges erreicht werden.

Um die Kennung zwischen Sender und Empfänger zu erhöhen und durch Fremdsignale ausgelöste Fehlanzeigen weitestgehend auszuschließen, besteht das Sendesignal vorzugsweise aus zwei verschiedenen Frequenzen (beispielsweise 9,6 kHz und 10,4 kHz), welche abwechselnd über eine Zeitspanne von 10 bis 20 Millisekunden erzeugt werden. Die gesamte Dauer eines Sendesignals beträgt vorzugsweise nur einige wenige Sekunden, beispielsweise 1 bis 3 Sekunden und besonders bevorzugt ca. 1,6 Sekunden. Unter diesen Bedingungen reicht die Kapazität der oben angegebenen Lithium-Batterie für wenigstens 500 bis 1000 Alarmimpulse aus, d.h. für die gesamte zu erwartende Lebensdauer des Ventiles. Die Signalerzeugungseinrichtung einschließlich Batterie kann deshalb an nicht einfach zugänglicher Stelle innerhalb des Reifens untergebracht werden.

Der gesamte Sender mit sämtlichen elektrischen und/oder elektronischen Komponenten ist vorzugsweise als Modul ausgeführt. Die Komponenten, einschließlich zwei Chips, einem RC-Generator und einer Anzahl Kondensatoren und Widerstände befinden sich an einer Platine, die eine gedruckte Schaltung bildet. Bei einer praktischen Ausführungsform reicht eine runde Platine mit einem Durchmesser von ca. 17 mm zur Aufnahme sämtlicher Komponenten aus. Diese Platine mit den Komponenten befindet sich geschützt im Inneren einer Kunststoffhülse, an deren Außenumfang - in einer Nut - die als Drahtwicklung ausgebildete Sendespule angebracht ist. Die gesamte Signalerzeugungseinrichtung einschließlich Referenzkammer mit Schaltglied, Sender und Batterie kann ein einziges, integriertes Bauteil mit einem Durchmesser von etwa 18 mm und einer Länge von etwa 7 mm bilden. Abgesehen vom Zugang für den zu überwachenden Reifendruck kann das Bauteil gekapselt ausgeführt sein, um Beeinträchtigungen durch Bestandteile des Druckmediums innerhalb des Reifens zu vermeiden. Das gesamte integrierte Bauteil wiegt weniger als 10 g und erhöht damit das Gewicht eines herkömmlichen Metallventiles nicht wesentlich.

Jedem Reifenventil mit seinem Sender ist ein eigener Empfänger zugeordnet. Zu jedem Empfänger gehört typischerweise ein Ferritstab mit einer Empfangsantenne und einer bekannten Empfängerschaltung. Die Stromversorgung der Empfängerschaltung erfolgt über die Stromversorgungsquelle des Fahrzeugs. Die Ausgänge der Empfängerschaltung sind über Verbindungsleitungen mit einer Anzeigeeinrichtung am Armaturenbrett oder dergleichen des Fahrzeugs verbunden. Zur Anzeigeeinrichtung gehört eine Auswerteelektronik, welche die von einem bestimmten Sender/Empfänger stammenden Impulse der zugehörigen Radanzeige zuordnet. Weiterhin erzeugt die Anzeigeeinrichtung auf die vom Empfänger erhaltenen Impulse hin ein optisch und/oder akustisch wahrnehmbares Warnsignal, das auch nach Beendigung der Aussendung von Signalfrequenzen so lange bestehen bleibt, bis der Fahrzeuglenker die Warnanzeige gelöscht oder zurückgesetzt hat.

Nach der Aussendung eines Alarmimpulses ist die Signalerzeugungseinrichtung erneut zur Aussendung eines neuen Alarmimpulses bereit, nachdem die Membran in ihre Ruhelage zurückgekehrt ist. Dies kann insbesondere durch Niederdrücken des Ventilstößels des Reifenventils erfolgen, weil dann der Zugang zur Referenzkammer geöffnet und ein Druckausgleich bzw. eine neue Einstellung eines Solldruckes erfolgt.

Nachstehend wird die Erfindung mehr im einzelnen anhand einer bevorzugten Ausführungsform mit Bezugnahme auf die Zeichnungen erläutert; die letzteren zeigen:
- Figur 1: anhand einer schematischen Schnittdarstellung ein erfindungsgemäßes Ventil mit einer Signalerzeugungseinrichtung; und
- Figur 2: eine abgewandelte Ausführungsform des Ventils nach Fig. 1 mit einer anderen Alternative zur Beaufschlagung der Referenzkammer mit einem Solldruck.

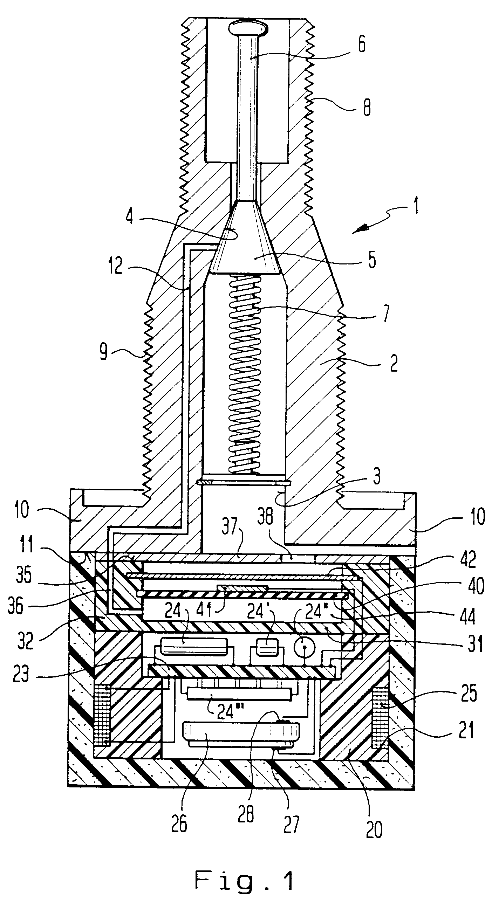

Die in Fig. 1 dargestellte Ausführungsform eines erfindungsgemäßen Ventils besteht im wesentlichen aus dem Ventil 1 und einer Signalerzeugungseinrichtung. Das Ventil 1 weist einen Ventilschaft 2 auf, der eine Ventilbohrung 3 begrenzt. Am Innenumfang der Ventilbohrung 3 ist ein Ventilsitz 4 ausgebildet. An diesem Ventilsitz 4 kann ein Ventilkörper 5 anliegen, der von einer Feder 7 gegen den Ventilsitz 4 gepreßt wird und das Ventil 1 verschließt. Mit dem Ventilkörper 5 ist einstückig ein Ventilstößel 6 verbunden, durch dessen Verstellung der Ventilkörper 5 vom Ventilsitz 4 entfernt werden kann, so daß Druckmedium durch die Ventilbohrung 3 hindurchtreten kann. Der Außenumfang des Ventilschaftes 2 kann mit einem abgestuften Außengewinde 8 und 9 versehen sein. Am Ventilschaft 2 ist einstückig ein Ventilfuß 10 angeformt.

Bei einer typischen Anwendung wird dieses Ventil 1 durch ein Ventilloch in einer Felge geführt, so daß - unter Zwischenlage einer nicht dargestellten Dichtung - der Ventilfuß 10 an der Innenwand der Felge zur Anlage kommt. Anschließend wird eine Überwurfmutter auf das Außengewinde 9 aufgeschraubt und das Ventil 1 an der Felge festgelegt. In diesem Falle ist das Ventil 1 für einen schlauchlosen Fahrzeugreifen bestimmt. Das gesamte Ventil 1 besteht typischerweise aus Metall, etwa einer Zink/Kupfer-Legierung oder einer Aluminiumlegierung.

Nach einem Gesichtspunkt der vorliegenden Erfindung ist innerhalb des Ventilschaftes 2 ein Kanal 12 ausgespart, der einerseits in den Ventilsitz 4 mündet und andererseits an einer Stirnfläche 11 des Ventilfußes 10 mündet. Bei Anlage des Ventilkörpers 5 am Ventilsitz 4 ist auch dieser Kanal 12 gesperrt. Bei Entfernung des Ventilkörpers 5 vom Ventilsitz 4 kann Druckmedium durch den Kanal 12 hindurchtreten.

An der zum Ventilschaft 2 abgewandten Seite des Ventilfußes 10 ist eine Signalerzeugungseinrichtung derart angebracht, daß eine Strömungsverbindung zwischen der Ventilbohrung 3 und dem Reifeninnenraum verbleibt.

Zu dieser Signalerzeugungseinrichtung gehört eine Hülse 20, an deren Außenumfang eine Nut 21 ausgespart ist, und an deren Innenumfang ein Vorsprung 22 angeformt ist. An diesem Vorsprung 22 ist eine Platine 23 abgestützt, an der sich die elektrischen und/oder elektronischen Komponenten 24, 24′, 24'' und 24''' eines Senders befinden. Zu diesem Sender gehört ferner eine als Drahtwicklung ausgebildete Sendespule 25, die innerhalb der Nut 21 am Außenumfang der Hülse 20 untergebracht ist. Weiterhin ist im Innenraum der Hülse 20 eine Knopfzelle 26 untergebracht und befestigt. Von den Anschlußklemmen 27 und 28 der Knopfzelle 26 führt je eine Leitung zur Platine 23.

Weiterhin weist die Signalerzeugungseinrichtung eine Dose 30 auf, die im wesentlichen aus einem Dosenboden 31 und einer Dosenumfangswand 32 besteht, die ihrerseits eine Stirnfläche 35 aufweist. Am Innenumfang der Dosenumfangswand 32 ist eine Membran 40 eingespannt, in deren Zentrum ein Metallplättchen 41 angebracht ist. Es wird eine Referenzkammer 44 geschaffen, die von der Membran 40, dem Dosenboden 31 und der Dosenumfangswand 32 begrenzt ist. In der Dosenumfangswand 32 ist ein Durchlaß 36 ausgespart, der an der Stirnfläche 35 der Dosenumfangswand 32 beginnt und in die Referenzkammer mündet. Dieser Durchlaß 36 trifft auf einen Abschnitt des Kanales 12 im Ventilfuß 10, so daß mit Hilfe des Kanales 12 und des Durchlasses 36 eine Strömungsverbindung vom Ventilsitz 4 zur Referenzkammer 44 gegeben ist.

Ein Abschnitt der Dosenumfangswand 32 steht über die Membran hinaus. Ein Leiterabschnitt 42 ist in geringem Abstand zur Membran 40 und parallel zu dieser angeordnet und an gegegenüberliegenden Stellen dieses über die Membran 40 hinausstehenden Abschnittes der Dosenumfangswand 32 befestigt. Das im Zentrum der Membran 40 angebrachte Metallplättchen 41 und der Leiterabschnitt 42 bilden zusammen ein im Regelfalle offenes, mechanisches Schaltglied. Sowohl das Metallplättchen 41 wie der Leiterabschnitt 42 sind über je eine Leitung an die Platine 23 angeschlossen. Bei einer Membranauslenkung kontaktiert das Metallplättchen 41 den feststehenden Leiterabschnitt 42, und es wird ein Stromkreis geschlossen, welcher die im Bereitschaftszustand befindliche Digitalschaltung des Senders aktiviert, woraufhin eine Signalaussendung durchgeführt wird.

Wie in der Zeichnung dargestellt, sind Hülse 20 und Dose 30 mit ihren jeweiligen Komponenten miteinander verbunden und bilden zusammen ein integriertes Bauteil. Dieses Bauteil kann in Gießharz 39 eingebettet oder auf sonstige Weise gekapselt sein, um Schutz vor Bestandteilen des Druckmediums im Reifen zu gewährleisten. Angrenzend an den Ventilfuß 10 kann dieses Bauteil eine Deckplatte 37 aufweisen, die vor dem direkten Auftreffen des Druckmediums auf die Membran 40 schützt. In dieser Deckplatte 37 ist eine Öffnung 38 ausgespart, durch welche der zu überwachende Reifendruck beständig die Membran 40 beaufschlagt.

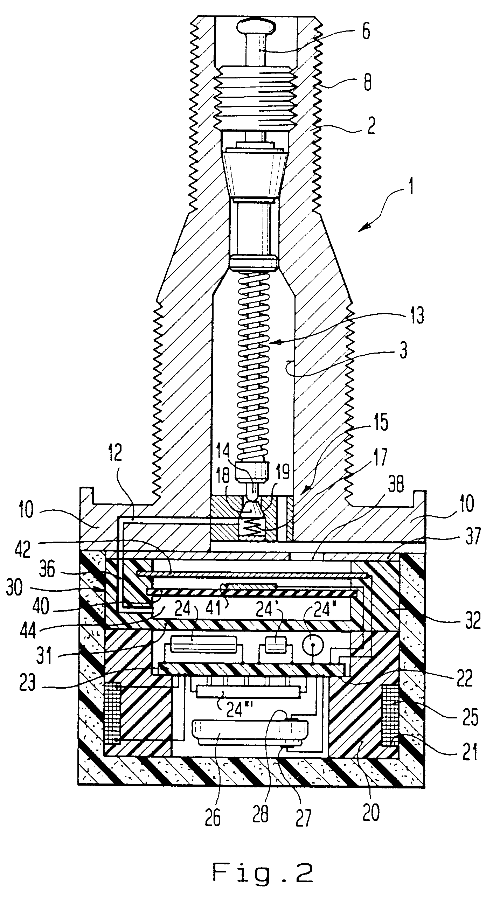

Fig. 2 zeigt eine alternative Ausführungsform des erfindungsgemäßen Ventils, dessen Signalerzeugungseinrichtung in gleicher Weise aufgebaut ist, wie oben mit Bezugnahme auf Fig. 1 erläutert. Abweichend weist das Ventil 1 innerhalb der Ventilbohrung 3 einen herkömmlichen Ventileinsatz 13 auf. Fluchtend mit diesem Ventileinsatz 13 befindet sich innerhalb der Ventilbohrung 3 ein Rohrabschnitt, in den ein Hilfsventil 15 eingesetzt ist. Dieses Hilfsventil 15 kann als Rückschlagventil ausgebildet sein, dessen Ventilkörper 18 von einer Feder 17 gegen einen Ventilsitz 19 gedrückt wird. In diesen Rohrabschnitt mündet ein Kanal 12 des Ventiles 1 gemäß Fig. 1. Am Ventileinsatz 13 ist ein über dessen Abstützung hinausragender Stab 14 angebracht. Bei einer Betätigung des Ventilstößels 6 trifft dieser Stab 14 auf den Ventilkörper 18 des Hilfsventiles 15 und entfernt diesen von seinem Ventilsitz 19. Druckmedium kann in den Rohrabschnitt eintreten, strömt durch den Kanal 12 und gelangt durch den Durchlaß 36 in die Referenzkammer 44. Nachdem der Ventilstößel 6 unter der Wirkung der Feder am Ventileinsatz 13 wieder seine Ausgangsstellung eingenommen hat, hat sich auch der Stab 14 vom Ventilkörper 18 des Hilfsventils 15 gelöst und dessen Feder 17 drückt den Ventilkörper 18 erneut gegen seinen Ventilsitz 19 und verschließt das Hilfsventil 15. Die Referenzkammer 44 ist geschlossen und darin dauerhaft ein Solldruck gespeichert.

## Patentansprüche

1. Ein Ventil mit einer Einrichtung zur Erzeugung eines drahtlos übermittelbaren Anzeigesignals bei Druckabnahme in Fahrzeugreifen,
mit einem Ventilfuß (10), von dem ein Ventilschaft (2) absteht,
wobei die Signalerzeugungseinrichtung eine vom zu überwachenden Reifendruck beaufschlagte Membran (40) aufweist, die bei anormalem Reifendruck auslenkbar ist, diese Signalerzeugungseinrichtung ferner einen Sender (24, 24′, 24'', 24'''; 25), eine Stromversorgungseinrichtung (26) und ein mechanisches, im Regelfalle offenes Schaltglied (41, 42) aufweist, das bei einer Membranauslenkung geschlossen wird, woraufhin der Sender aktiviert wird,
dadurch gekennzeichnet, daß
die Signalerzeugungseinrichtung an der zum Ventilschaft (2) abgewandten Seite des Ventilfußes (10) angebracht ist;
der Sender (24, 24′, 24'', 24'''; 25) eine Ablaufsteuerung aufweist, welche nach kurzfristiger Signalaussendung diese Signalaussendung wieder unterbricht und den Sender erneut in einen Bereitschaftszustand versetzt;
die Signalerzeugungseinrichtung eine Referenzkammer (44) aufweist, die bei geöffnetem Reifenventil (1) über einen in diesem geführten Kanal (12) mit einem Solldruck beaufschlagbar und bei geschlossenem Reifenventil (1) druckdicht verschlossen ist; und
diese Referenzkammer (44) teilweise von der Membran (40) begrenzt ist, die eine von der Referenzkammer (44) weg ausgelenkte Stellung einnimmt und die Schließung des Schaltgliedes (41, 42) veranlaßt, wenn der zu überwachende Reifendruck kleiner als der Solldruck ist.

2. Das Ventil nach Anspruch 1,
wobei der Ventilschaft (2) eine Ventilbohrung (3) begrenzt, an der ein Ventilsitz (4) ausgebildet ist, an dem ein Ventilkörper (5) anliegen kann, um das Reifenventil (1) zu verschließen,
dadurch gekennzeichnet, daß
in diesem Ventilsitz (4) der Kanal (12) mündet, über welchen die Referenzkammer (44) mit Druckmedium beaufschlagbar ist.

3. Das Ventil nach Anspruch 1,
dadurch gekennzeichnet, daß
innerhalb der Ventilbohrung (3) ein Rohrabschnitt ausgebildet ist, in welchem der Kanal (12) mündet, über welchen die Referenzkammer (44) mit Druckmedium beaufschlagbar ist; und
in diesen Rohrabschnitt ein Hilfsventil (15) eingesetzt ist, das gemeinsam mit dem Reifenventil (1) geöffnet oder geschlossen wird.

4. Das Ventil nach Anspruch 3,
dadurch gekennzeichnet, daß
das Hilfsventil (15) als Rückschlagventil ausgebildet ist.

5. Das Ventil nach einem der Ansprüche 1 bis 4,
dadurch gekennzeichnet, daß
die Signalerzeugungseinrichtung eine Hülse (20) aufweist, an deren Innenumfang eine Platine (23) abgestützt ist, auf welcher die elektrischen und/oder elektronischen Komponenten (24, 24′, 24'', 24''') des Senders angebracht sind.

6. Das Ventil nach Anspruch 5,
dadurch gekennzeichnet, daß
zu dem Sender eine als Drahtwicklung ausgebildete Sendespule (25) gehört, die in einer Nut (21) am Außenumfang der Hülse (20) angebracht ist.

7. Das Ventil nach Anspruch 5 oder 6,
dadurch gekennzeichnet, daß
im Innenraum der Hülse (20) eine Batterie (26) untergebracht und befestigt ist.

8. Das Ventil nach einem der Ansprüche 1 bis 7,
dadurch gekennzeichnet, daß
zu der Signalerzeugungseinrichtung eine flache Dose (30) gehört, die im wesentlichen von einem Dosenboden (31) und einer Dosenumfangswand (32) begrenzt ist, deren Dosenöffnung durch die Membran (40) verschlossen ist.

9. Das Ventil nach Anspruch 8,
dadurch gekennzeichnet, daß
in der Dosenumfangswand (32) ein Durchlaß (36) ausgespart ist, der an einer Stirnfläche (35) der Dosenumfangswand (32) beginnt, in die Referenzkammer (44) mündet und an den Kanal (12) im Ventilfuß (10) bzw. Ventilschaft (2) angeschlossen ist.

10. Das Ventil nach einem der Ansprüche 1 bis 9,
dadurch gekennzeichnet, daß
das Schaltglied aus einem im Zentrum der Membran (40) angebrachten Metallplättchen (41) und einem Leiterabschnitt (42) besteht, der parallel und in geringem Abstand zur Ruhelage der Membran (40) angebracht ist.

11. Das Ventil nach einem der Ansprüche 1 bis 10,
dadurch gekennzeichnet, daß
der Sender eine Digitalschaltung und einen Schwingkreis aufweist, dessen Spule (25) als Sendeantenne ausgebildet ist.

12. Das Ventil nach Anspruch 11,
dadurch gekennzeichnet, daß
die Digitalschaltung einen RC-Generator, eine Startvorrichtung (Trigger), eine Modulatorschaltung, einen vielstufigen Frequenzteiler und einen ein- und ausschaltbaren Leistungsverstärker aufweist.

13. Das Ventil nach einem der Ansprüche 1 bis 12,
dadurch gekennzeichnet, daß
der Sender zwei verschiedene, vergleichsweise langwellige Signalfrequenzen im kHz-Bereich erzeugt, die abwechselnd abgestrahlt werden.

14. Das Ventil nach Anspruch 12 oder 13,
dadurch gekennzeichnet, daß
eine Ablaufsteuerung der Digitalschaltung vorgesehen ist, wobei mit Hilfe des RC-Generators und des Frequenzteilers zwei verschiedene Frequenzen erzeugt werden, die abwechselnd ausgesendet werden, nach einer vorgegebenen Zyklenzahl die Signalaussendung beendet wird, und die gesamte Schaltung erneut in einen Bereitschaftszustand versetzt wird.

15. Das Ventil nach einem der Ansprüche 1 bis 14,
dadurch gekennzeichnet, daß
die Signalaussendung nach einigen wenigen Sekunden, vorzugsweise nach 1 bis 3 Sekunden selbsttätig unterbrochen wird.

## Claims

1. A valve having means for generating a wireless transmittable indicating signal due to a pressure drop within vehicle tyres, the tyre valve comprising:
- a valve foot (10) and a valve shaft (2) extending from said valve foot (10); and
- a signal generating means comprising
-- a diaphragm (40) being admittable with the tyre pressure to be controlled and being deflectable due to an abnormal tyre pressure;
-- a transmitter means (24, 24', 24'', 24'''; 25); a power supply means (26); and
-- a mechanical switching means (41, 42) being regularly opened and adapted to be completed with a deflection of said diaphragm (40), said switching means completion causes an activation of said transmitter means;
characterized in that
the signal generating means being mounted on said valve foot (10) at a valve foot side remote from said valve shaft (2);
the transmitter means (24, 24', 24'', 24'''; 25) comprises a sequence control which terminates a signal transmission after a short duration thereof and resets said transmitter means in a standby condition;
the signal generating means comprises a reference pressure chamber (44) being admittable with a desired pressure through a first passage (12) provided within the valve means when the tyre valve means (1) is opened and adapted to be closed pressure-tight when the tyre valve means (1) is closed; and
wherein said reference pressure chamber (44) being partly defined by said diaphragm (40) which takes a position deflected away from said reference pressure chamber (44) and causes completion of said switching means (41, 42) whenever the tyre pressure to be controlled is lower than the desired pressure.

2. The valve according to claim 1,
comprising a valve shaft (2) which defines a valve bore (3), said valve bore (3) being provided with a valve seat (4); and further comprising a valve body (5) adapted to engage said valve seat (4) in order to close the tyre valve (1),
characterized in that
said first passage (12) opens into said valve seat (4) and connects the valve bore (3) with the reference pressure chamber (44) in order to admit said reference pressure chamber (44) with pressurized fluid medium.

3. The valve according to claim 1,
characterized in that
the valve bore (3) comprises a second passage section;
the first passage (12), through which the pressure chamber (44) being admittable with the pressurized fluid medium opens into said second passage section; and
an auxiliary valve (15) being arranged within said second passage section and adapted to become opened or closed common with the tyre valve (1).

4. The valve according to claim 3,
characterized in that
said auxiliary valve (15) is a spring-loaded check valve.

5. The valve according to anyone of the claims 1 to 4,
characterized in that
said signal generating means further comprises:
- a sleeve (20) having an inner circumferential face; and
- a circuit board (23) mounted on said inner circumferential face wherein the electric and/or electronic components (24, 24', 24'', 24''') of the transmitter means being attached to said circuit board (23).

6. The valve according to claim 5,
characterized in that
said sleeve (20) comprises an outer circumferential face having a circumferential recess (21); and
wherein the transmitter means comprises a transmitter coil (25) being formed as a wire coil and located within said circumferential recess (21).

7. The valve according to claim 5 or 6,
characterized in that
the power supply means is a battery or storage battery (26) being arranged within said sleeve (20).

8. The valve according to anyone of the claims 1 to 7,
characterized in that
the signal generating means comprises a flat cell (30) provided with a cell bottom (31), with a circumferential cell wall (32) and with a cell opening; and
wherein said cell opening is closed by the diaphragm (40).

9. The valve according to claim 8,
characterized in that
a third passage (36) is recessed within said circumferential cell wall (32), starting at a front face (35) of said cell circumferential wall (32), opening into said reference pressure chamber (44) and providing a flow connection to the first passage (12) recessed within the valve foot (10) or within the valve shaft (2).

10. The valve according to anyone of the claims 1 to 9,
characterized in that
said switching means comprises a small metal plate (41) attached to a central portion of the diaphragm (40) and further comprises a conductor section (42) arranged parallel to the diaphragm (40) and in a short distance to a rest position of the diaphragm (40).

11. The valve according to anyone of the claims 1 to 10,
characterized in that
the transmitter means comprises a digital circuit and an oscillating circuit provided with a coil (25) which is formed as a transmitting antenna.

12. The valve according to claim 11,
characterized in that
said digital circuit comprises a RC-oscillator, a trigger circuit, a modulation cicuit, a multi-stage frequency divider and a power amplifier which may be switched on or off.

13. The valve according to anyone of the claims 1 to 12,
characterized in that
the transmitter means generates two different signal frequencies, being relatively long-waved in the kHz-range, and said different signal frequencies being transmitted alternately.

14. The valve according to claim 12 or 13,
characterized in that
the digital circuit comprises a sequence control which generates along with the RC-oscillator and with the frequency divider two different signal frequencies being transmitted alternately, and further, said sequency control terminates the signal transmission after a given number of cycles and resets the complete transmitter means in a standby condition.

15. The valve according to anyone of the claims 1 to 14,
characterized in that
the signal transmission is stopped after a few seconds, preferably after 1 to 3 seconds.

## Revendications

1. Valve comprenant un dispositif destiné à produire un signal indicateur pouvant être transmis sans fil, si la pression d'un pneumatique de véhicule automobile diminue,
comprenant une embase (10) de valve de laquelle est issue une tige (2) de valve, le dispositif de production d'un signal comportant une membrane (40) soumise à la pression du pneumatique à contrôler et qui peut se déplacer lorsque la pression du pneumatique est anormale, ce dispositif de production d'un signal comportant en outre un émetteur (24, 24', 24'', 24''', 25), un dispositif (26) d'alimentation en courant et un organe (41, 42) de commutation mécanique qui, en règle générale, est ouvert et qui se ferme lorsque la membrane se déplace, l'émetteur étant alors mis en action,
caractérisée en ce que
le dispositif de production d'un signal est monté sur la face de l'embase (10) de valve, qui est éloignée de la tige (2) de valve,
l'émetteur (24, 24', 24'', 24''', 25) comporte une commande séquentielle, qui, après émission d'un signal de courte durée, interrompt à nouveau cette émission de signal et remet l'émetteur en un état de disponibilité; le dispositif de production d'un signal comporte une chambre (44) de référence, qui, lorsque la valve (1) de pneumatique est ouverte, peut être soumise à une pression de consigne par l'intermédiaire d'un canal (12) qui y mène et, lorsque la valve (1) de pneumatique est fermée, est fermé de manière étanche à la pression; et cette chambre (44) de référence est délimitée partiellement par la membrane (40) qui prend une position éloignée de la chambre (44) de référence et qui provoque la fermeture de l'organe (41, 42) de commutation, lorsque la pression du pneumatique à contrôler est inférieure à la pression de consigne.

2. Valve suivant la revendication 1,
la tige (2) de valve délimitant un alésage (3) de valve, sur lequel est formé le siège (4) de valve, où l'obturateur (5) de valve peut s'appliquer pour fermer la valve (1) du pneumatique.
caractérisée en ce que le canal (12), par lequel la chambre (44) de référence peut être alimentée en fluide sous pression, débouche dans ce siège (4) de valve.

3. Valve suivant la revendication 1,
caractérisée en ce que
à l'intérieur de l'alésage (3) de valve est formé un tronçon tubulaire, dans lequel débouche le canal (12) par lequel la chambre (44) de référence peut être alimentée en fluide sous pression; et
dans ce tronçon tubulaire, est montée une valve (15) auxiliaire, qui se ferme ou s'ouvre en même temps que la valve (1) de pneumatique.

4. Valve suivant la revendication 3,
caractérisée en ce que
la valve (15) auxiliaire a la forme d'un clapet antiretour.

5. Valve suivant l'une des revendications 1 à 4,
caractérisée en ce que
le dispositif de production d'un signal comporte un manchon (20) sur le pourtour intérieur duquel s'appuie une platine (23), sur laquelle sont montés les composants (24, 24', 24'', 24''') électriques ou électroniques de l'émetteur.

6. Valve suivant la revendication 5,
caractérisée en ce que
fait partie de l'émetteur une bobine (25) d'émission, qui est sous forme d'un enroulement de fil et qui est montée dans une gorge (21) sur le pourtour extérieur du manchon.

7. Valve suivant la revendication 5 ou 6,
caractérisée en ce que
à l'intérieur du manchon (20) est logée et fixée une batterie (26).

8. Valve suivant l'une des revendications 1 à 7,
caractérisée en ce que
fait partie du dispositif de production d'un signal une boîte (30) plate, qui est délimitée essentiellement par un fond (31) de boîte et par une paroi (32) faisant tout le tour de la boîte, l'ouverture de la boîte étant fermée par la membrane (40).

9. Valve suivant la revendication 8,
caractérisée en ce que
dans la paroi (32) délimitant le pourtour de la boîte, est ménagé un passage (36) qui débute sur une face (35) frontale de la paroi (32) délimitant le pourtour de la boîte, qui débouche dans la chambre (44) de référence et qui est raccordé au canal (12) ménagé dans l'embase (10) de la valve et dans la tige (2) de valve.

10. Valve suivant l'une des revendications 1 à 9,
caractérisée en ce que
l'organe de commutation est constitué d'une plaquette (41) métallique montée au centre de la membrane (40) et d'une partie (42) conductrice, qui est montée parallèlement à la membrane (40) et à faible distance de celle-ci lorsqu'elle est en position de repos.

11. Valve suivant l'une des revendications 1 à 10,
caractérisée en ce que
l'émetteur comporte un circuit numérique et un circuit oscillant dont la bobine (45) forme une antenne émettrice.

12. Valve suivant la revendication 11,
caractérisée en ce que
le circuit numérique comporte un générateur RC, un déclencheur (Trigger), un circuit modulateur, un diviseur de fréquence à plusieurs étages et un amplificateur de puissance pouvant être mis en et hors circuit.

13. Valve suivant l'une des revendications 1 à 12,
caractérisée en ce que
l'émetteur produit deux fréquences de signal différentes de relativement grande longueur d'onde de l'ordre du kHz, qui sont émises en alternance.

14. Valve suivant la revendication 12 ou 13,
caractérisée en ce que
il est prévu une commande séquentielle du circuit numérique, deux fréquences différentes émises en alternance s'achevant après un nombre de cycles prescrit de l'émission de signal et tout le circuit étant remis à l'état de disponibilité à l'aide du générateur RC et du diviseur de fréquence.

15. Valve suivant l'une des revendications 1 à 14,
caractérisée en ce que
l'émission de signal s'interrompt automatiquement après quelques secondes, de préférence après 1 à 3 secondes.
